# FASCICULE DE BREVET EUROPEEN

(11) **EP 3 477 215 B1**
(45) Date de publication et mention de la délivrance du brevet: **12.07.2023**
(21) Numéro de dépôt: 18201935.6
(22) Date de dépôt: 23.10.2018
(51) Int. Cl.: F24F 11/54, F24F 11/61, F24F 11/74, F24F 110/12, F24F 120/10, F24F 110/50, F24F 110/32, F24F 110/40

(54) **SYSTÈME DE GESTION D'UNITÉS DE VENTILATION**
STEUERUNGSSYSTEM VON BELÜFTUNGSEINHEITEN
SYSTEM FOR MANAGING FAN UNITS

(30) Priorité: 24.10.2017 FR 1760060
(43) Date de publication de la demande: 01.05.2019
(73) Titulaire: Amphoux, André, F-75012 Paris (FR)
(72) Inventeur: Amphoux, André, F-75012 Paris (FR)
(74) Mandataire: Derambure Conseil

(56) Documents cités:
- EP-A2- 1 130 333
- WO-A1-2013/107461
- WO-A1-2016/175073
- FR-A1- 3 030 697

## Description

### DOMAINE TECHNIQUE

L'invention concerne le domaine des systèmes de ventilation paramétrables destinés à permettre un renouvellement d'air dans un espace d'occupation humaine.

Plus précisément, l'invention concerne le domaine des systèmes de gestion d'installations de ventilation dans un bâtiment.

### ETAT DE L'ART

On connaît par exemple une installation de ventilation selon FR 2 851 641, dans laquelle la vitesse du ventilateur est déterminée en fonction d'un certain nombre de paramètres tels que, notamment la température extérieure et/ou la vitesse du vent. D'autres paramètres sont susceptibles d'être pris en compte, comme l'heure, l'utilisation du bâtiment, l'occupation, la présence d'individus, une teneur en CO2, des mouvements, ou l'émission de polluants...

Le document EP 0 972 991 décrit un dispositif mixte, statique/dynamique pour l'évacuation de fluide gazeux, notamment de gaz rejetés ou de fumées. Ce dispositif comprend en premier lieu un élément supérieur et un élément inférieur, superposés, coaxiaux, rigidement fixés l'un à l'autre. L'élément inférieur comprend deux coupelles, traversées par un conduit débouchant du côté de la coupelle inférieure dans l'espace compris entre les deux éléments. L'autre extrémité du conduit est destinée à être fixée à l'arrivée des fluides gazeux. Les deux coupelles sont fixées l'une à l'autre par leur grande base commune. L'élément supérieur comprend aussi deux coupelles dont une forme le chapeau. Ce dispositif comprend en second lieu une turbine centrifuge comprenant un moteur et au moins une pale.

Les documents EP 0 329 498 et EP 0772 003 décrivent un procédé d'activation d'extraction d'air réalisé par un jet d'air primaire à haute pression insufflé en partie haute des conduits de ventilation, près des débouchés, via une buse d'injection dirigée vers la sortie des conduits. Le jet d'air primaire crée par friction avec l'air secondaire (i.e. l'air que l'on souhaite extraire) un effet d'induction permettant l'extraction de l'air vicié à basse pression. La buse se trouve au centre du conduit collectif d'extraction d'air.

Le document EP 0 329 498, plus particulièrement, décrit un procédé de mise en mouvement de l'air ou plus généralement de fluide dans des gaines dites étanches, par un faible débit d'air ou de fluide soufflé ou pulsé à grande vitesse au centre de la gaine dans le sens de circulation désirée.

Le document EP 1 597 523 décrit un procédé et un système de réglage d'un ventilateur d'un système de ventilation d'un bâtiment comprenant en outre un module de commande et un variateur de fréquence agencé pour faire varier la vitesse d'entraînement du ventilateur. Selon ce procédé, on mesure un paramètre d'entrée choisi parmi des paramètres caractéristiques climatiques et/ou d'utilisation du bâtiment, tel que la température extérieure et la vitesse du vent, on transmet la valeur de ce paramètre au module de commande, on détermine par l'intermédiaire d'une programmation préétablie du module de commande une valeur de sortie correspondant au paramètre, on transmet cette valeur de sortie au variateur de fréquence, on détermine la fréquence correspondant à la valeur de sortie, on entraîne le ventilateur à une vitesse fonction de cette fréquence de sorte que l'intensité de la ventilation est adaptée au paramètre d'entrée.

Le document FR 3 030 697 A1 montre un système de gestion d'unités de ventilation selon le préambule de la revendication 1.

On connaît sur le marché des dispositifs de ventilation stato-mécanique, comme par exemple celui connu sous la marque DYN ASTATO^{®}, destinés à être placés sur le toit du bâtiment concerné. Dans un tel dispositif, l'extracteur statique est équipé d'un dispositif mécanique, à savoir une turbine, qui assiste la ventilation naturelle quand les conditions du tirage naturel ne sont plus réunies ou quand les besoins le requièrent. Cette assistance mécanique est programmée en fonction de l'heure, moyennant une horloge, et de la température extérieure, moyennant une sonde de température, et/ou de la vitesse du vent, moyennant un anémomètre. On connaît également des dispositifs de ventilation naturelle et hybride basse pression assistée par induction d'air, comme par exemple celui connu sous la marque NAVAIR^{®}.

De tels dispositifs de ventilation sont principalement destinés à l'habitat collectif (mais peut également convenir au secteur tertiaire : écoles, bureaux ...), un bâtiment donné comportant un ou plusieurs dispositifs de ventilation stato-mécanique avec ou sans induction d'air qui ventilent chacun un ou plusieurs conduits collectifs d'extraction d'air. Le plus souvent, une société assure la maintenance de ces dispositifs de ventilation, ce qui comprend la surveillance du bon fonctionnement, le suivi des consommations électriques, l'entretien préventif de routine, le réglage en cas de besoin, et la réparation de dysfonctionnement, de panne ou de défectuosités.

Une telle maintenance pose de nombreux problèmes. Elle impose non seulement un déplacement sur chaque site où se trouve chaque bâtiment, mais aussi de se rendre sur le toit du bâtiment. Elle impose un certain délai. Elle est plus curative que préventive. Elle est donc coûteuse et peu fiable, entraînant des nuisances pour les occupants des logements pouvant être sérieuses en cas de panne stoppant la ventilation du logement et dans certains cas l'arrêt du chauffage et de l'utilisation de l'eau chaude sanitaire. Ceci peut engendrer des moisissures et des problèmes d'humidité dans les logements.

En termes purement énergétiques, et compte tenu notamment de l'augmentation progressive de l'isolation des bâtiments, les déperditions liées à la ventilation représentent une part relative de plus en plus importante des besoins de chauffage des bâtiments (jusqu'à 30 % parfois). Il y a donc un besoin d'adapter au mieux la ventilation aux besoins. De ce fait, une meilleure analyse des besoins et de recherche d'une solution de ventilation permettrait de réaliser des installations de ventilation efficaces, c'est-à-dire adaptées et économes, tout en garantissant une bonne Qualité d'Air intérieur (QAI).

### RESUME

Selon un premier aspect, l'invention a pour objet un système de gestion d'unités de ventilation dans un bâtiment selon la revendication 1.

Grâce à ces dispositions, on dispose d'un système de contrôle global qui permet de contrôler la ventilation en fonction de données provenant de divers niveaux dans le bâtiment : niveau global pour tout le bâtiment, niveau local pour un espace intérieur et niveau intermédiaire pour un groupement d'espaces intérieurs. Non seulement, ce système de contrôle est adapté à différents types d'installation, mais il permet de prendre en compte les besoins locaux des habitants du bâtiment et de les répercuter de façon globale ou pas à la ventilation du bâtiment. Le système de contrôle unique est de plus modulaire, et peut s'adapter facilement à un parc de ventilation existant ainsi qu'aux évolutions futures de celui-ci.

L'invention pourrait de plus avoir au moins l'une des caractéristiques suivantes en combinaison ou non avec une ou plusieurs de ces mêmes caractéristiques :
- le module de communication est adapté à recevoir des données associées à la concentration d'au moins un polluant d'au moins un module de détection de qualité d'air, ledit au moins un module de détection étant associé à au moins un des espaces intérieurs pour analyser la concentration d'au moins un polluant dans ledit au moins un des espaces intérieurs ;
- chaque espace intérieur a au moins un accessoire de ventilation connecté de manière fluide à l'unité de ventilation de son groupe d'espace intérieurs, ledit au moins un accessoire de ventilation étant connectés auxdits au moins un module de détection de qualité d'air, chacun des modules de détection de qualité d'air comprenant : un microcontrôleur adapté à déterminer un paramètre de fonctionnement dudit au moins un accessoire de ventilation en fonction des concentrations d'au moins un polluant détectées, le microcontrôleur étant adapté à opérer ledit au moins un accessoire de ventilation en fonction du paramètre de fonctionnement dudit au moins un accessoire de ventilation ;
- chaque unité de centralisation des données locales est associée à une unité de ventilation qui lui est propre ;
- les données extérieures au bâtiment incluent au moins un de : une température de l'air ambiant extérieur, une vitesse de l'air extérieur, une donnée horaire ;
- le système d'assistance d'extraction d'air inclut un organe d'extraction d'air et un moteur associé, et le paramètre global de fonctionnement est une vitesse du moteur ;
- le module de calcul de l'unité de gestion globale inclut un algorithme autorégulant la vitesse du moteur associé à l'organe d'extraction d'air en continue en fonction de valeurs prédéterminées ;
- au moins une des unités de ventilation inclue au moins un capteur de pression différentielle dans un conduit relié à ladite au moins une unité de ventilation, et le module de communication de l'unité de centralisation des données locales est adapté à recevoir une information de pression aux espaces intérieurs associés au dit conduits, l'information de pression provenant de capteurs de pression différentielle ;
- le module de communication de l'unité de gestion globale est adapté à communiquer avec un serveur distant du bâtiment ;
- l'unité de gestion globale est disposée sur un toit du bâtiment, et/ou l'unité de centralisation des données locales est disposée dans une partie commune reliant les espaces intérieurs d'un même groupe ;
- le paramètre local de fonctionnement de chaque unité de ventilation est une moyenne des taux de polluants détectés comme appartenant à une matrice de régulation sur l'ensemble des espaces intérieurs d'un même groupe ayant lesdits modules de détection.

Selon un deuxième aspect, l'invention a pour objet un procédé de gestion d'unités de ventilation dans un bâtiment selon la revendication 11.

Le procédé de gestion d'air ventilé pourrait comprendre de plus :
- Déterminer par le module de calcul de chaque unité de centralisation des données locales un paramètre de fonctionnement d'au moins un accessoire de ventilation en fonction des données associées au groupe d'espaces intérieurs reçues par le module de communication de chaque unité de centralisation des données locales, chaque espace intérieur ayant ledit au moins un accessoire de ventilation connecté de manière fluide à l'unité de ventilation de son groupe, ledit au moins un accessoire de ventilation étant connectés auxdits au moins un module de détection de qualité d'air; et
- Opérer ledit au moins un accessoire de ventilation par le module de détection de qualité d'air en fonction du paramètre de fonctionnement dudit au moins accessoire de ventilation déterminé par le module de détection de qualité d'air.

D'autres caractéristiques et avantages apparaîtront au cours de la description suivante d'une de ces formes de réalisation de l'invention, donnée à titre d'exemple non limitatif, en regard des dessins joints.

### FIGURES

Sur les dessins :
La figure 1 est une vue schématique en élévation d'un bâtiment muni d'un système de ventilation et d'un système de gestion correspondant selon l'invention.
La figure 2 est une vue schématique de différents modules du système de gestion du système de ventilation,
La figure 3 est une vue schématique d'un boîtier d'acquisition des polluants intérieurs utilisable par le système de gestion en communication avec un accessoire de ventilation (par exemple bouche d'extraction, entrées d'air, ou système à insufflation d'air) et une unité de centralisation des données locales, et
La figure 4 est une vue schématique d'un système de communication à distance par le système de gestion.

Sur les différentes figures, les mêmes références désignent des éléments identiques ou similaires.

### DESCRIPTION DETAILLEE

L'exposé détaillé de plusieurs modes de réalisation de l'invention est assorti d'exemples et fait référence aux dessins.

### 1. Le bâtiment et l'installation de ventilation

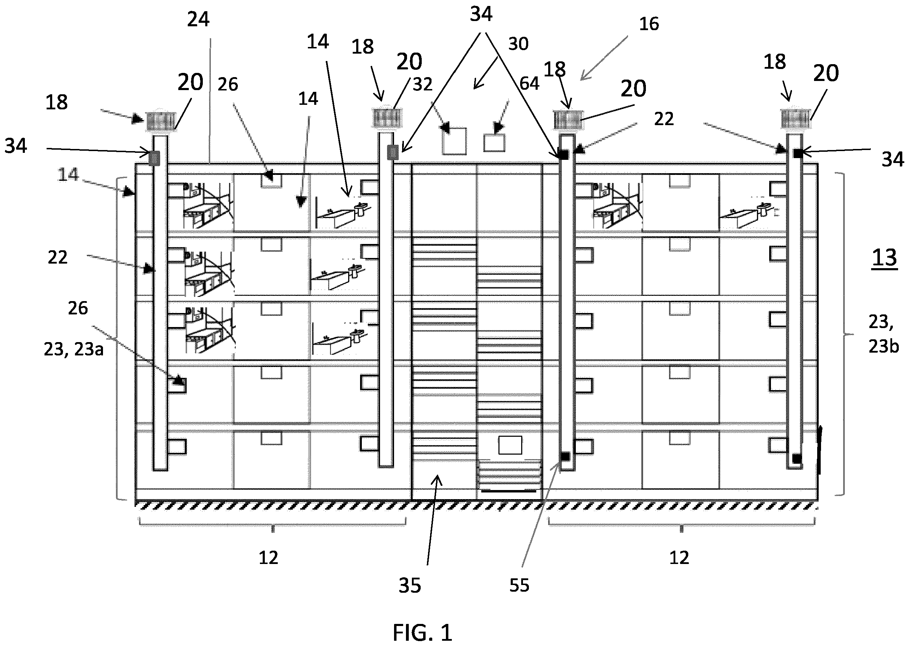

La **figure 1** représente schématiquement un **bâtiment 10** comprenant plusieurs **espaces intérieurs 12.** Les espaces intérieurs 12 peuvent être entièrement isolés les uns des autres, il peut par exemple s'agir de plusieurs espaces d'occupation disjoints. Le bâtiment 10 comprend par exemple plusieurs logements, et/ou des espaces d'activité humaine (bureaux, magasins, salle de classe, ateliers, ...). Le cas échéant, le bâtiment 10 est un bâtiment d'occupation mixte, comprenant plusieurs types d'espaces d'occupation pris dans la liste ci-dessus. En variante ou en complément, un espace intérieur 12 comprend plusieurs **sous-espaces intérieurs 14** qui ne sont que partiellement isolés les uns des autres. Il peut par exemple s'agir de différentes pièces d'un logement.

Les espaces intérieurs 12 peuvent être superposés verticalement les uns aux autres sur plusieurs étages comme illustré à la figure 1. Si les espaces intérieurs 12 sont des logements, ils peuvent comprendre des pièces humides, à savoir cuisine, toilettes et salle de bain, formant chacune un sous-espace intérieur 14 d'un même espace intérieur 12. Pour des questions de simplification de représentation, les cuisines et salle de bains de différents espace intérieur 12 superposés, sont elle-même superposées. Il pourrait cependant en être autrement.

Le bâtiment 10 comprend une **installation de ventilation 16** qui extrait l'air vicié des espaces intérieurs 12 vers l'extérieur 13 du bâtiment 10. L'installation de ventilation 16 présentée ici est indépendante d'installations de chauffage/climatisation équipant éventuellement le bâtiment 10 ou certains de ses espaces intérieurs 12. L'installation de ventilation 16 comprend une pluralité **d'unités de ventilation 18.** Chaque unité de ventilation 18 comprend un système d'assistance d'extraction d'air 20 et un ou plusieurs **conduits 22** associés. Chaque système d'assistance d'extraction d'air 20 comprend un organe d'extraction d'air 19 et un moteur 21 associé. Le système d'assistance d'extraction d'air 20 permet une ventilation naturelle et hybride, c'est-à-dire ayant une part naturelle, et une part assistée lorsque la température et/ou la vitesse de vent est au-dessous ou en dessous d'une certaine valeur.

L'organe d'extraction d'air 19 est par exemple pour le cas d'une extraction dynamique, un ventilateur mis en rotation par un moteur, le ventilateur extrayant l'air vicié d'un ou plusieurs conduits 22 associés, comme le système DYN ASTATO^{®} mentionné plus haut.

Selon un autre exemple, l'organe d'extraction d'air 19 pourrait aussi être des extracteurs statiques, associés à une soufflante mise en fonction par un moteur et connecté à un ou plusieurs conduits 22, comme le système NAVAIR^{®} mentionné plus haut.

La figure 1 montre par exemple, quatre unités de ventilation 18, avec les quatre conduits 22 associés s'étendant sensiblement verticalement entre l'espace intérieur 12 le plus inférieur (rez de chaussée voire sous-sol) desservi et le toit 24 du bâtiment 12. Dans l'exemple illustré, il y a un seul conduit 22 associé par organe d'extraction d'air 19. Il se pourrait cependant qu'un ou plusieurs des conduits soient extérieurs au bâtiment 12. Dans l'exemple illustré, les conduits 22 débouchent en plusieurs emplacements sur **le toit 24.**

L'installation de ventilation 16 est, dans un mode de réalisation, un système à induction d'air, par lequel un flux d'air à extraire dans le conduit est assisté par un flux d'air d'assistance généré dans chaque conduit desservi. Pour cela, l'organe d'extraction d'air 19 est adapté pour générer dans chaque conduit un flux d'air ascendant. L'installation de ventilation 16 est donc dans un mode de réalisation un système hybride, pouvant prendre alternativement un mode de fonctionnement naturel (organe d'extraction d'air 19 arrêté) ou un mode de fonctionnement mécaniquement assisté (organe d'extraction d'air 19 en marche). Cependant, il se pourrait que l'installation de ventilation 16 ait seulement un mode de fonctionnement naturel ou seulement un mode de fonctionnement mécaniquement assisté. Dans un mode de réalisation, l'extraction d'air se fait par aspiration ou insufflation d'air.

Chaque conduit 22 peut servir plusieurs espaces intérieurs 12, notamment plusieurs espaces intérieurs superposés pour extraire l'air vicié vers l'extérieur. Un même espace intérieur 12 peut être servi par plusieurs conduits, comme par exemple par deux conduits dont un des conduits sert les deux salles de bain, superposées, des deux appartements superposés. Un ou plusieurs accessoires de ventilation 26 servent d'interface entre l'espace intérieur 12 et le conduit 22 considéré. Le ou les accessoires de ventilation 26 incluent par exemple bouches d'extraction, entrées d'air, ou système à insufflation d'air. Le ou les accessoires de ventilation 26 pourraient éventuellement réglable pour adapter le passage d'air entre l'espace intérieur 12 et le conduit 22. Une manière de régler une bouche d'extraction sera décrite ci-après. Des appareils à combustion à gaz pourraient également être raccordés aux conduits 22. Un extracteur pourrait être prévu en extrémité de chaque conduit 22. On utilise selon un exemple un extracteur statique, i.e. sans assistance mécanique, par lequel l'écoulement naturel d'air au niveau de l'extracteur génère un flux d'air dans le conduit 22 par effet venturi.

L'installation de ventilation 16 peut également comprendre des entrées d'air, par exemple, sous la forme d'une bouche d'aération (non illustrée), qui pourrait se trouver au niveau des pièces sèches (e.g. chambres, salons, bureaux). D'autres modes de réalisation sont possibles. Les entrées d'air pourraient éventuellement être réglables pour adapter la section transversale de passage d'air entre l'extérieur 13 et l'espace intérieur 12. Les entrées d'air pourraient être également commandées par le boîtier d'acquisition des polluants parallèlement au un ou plusieurs accessoire de ventilation.

### 2. Le système de contrôle de ventilation général

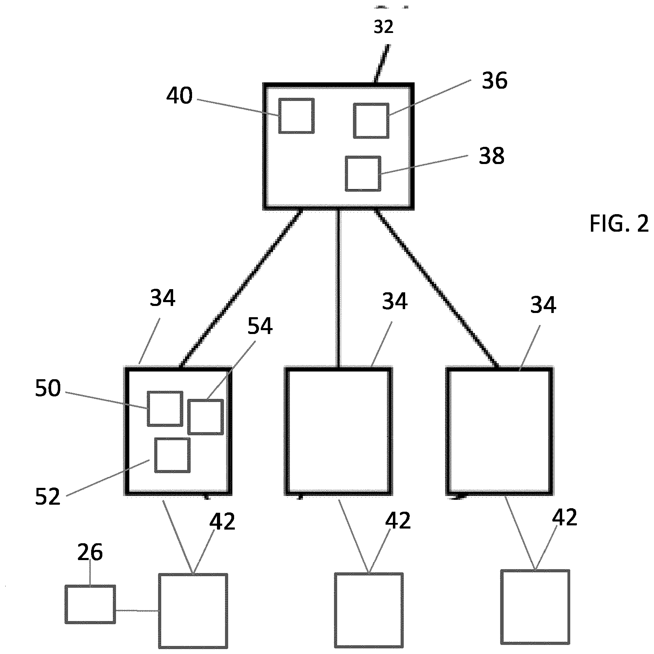

La **figure 2** représente schématiquement un **système de gestion 30** de l'installation de ventilation 16. Un groupe 23 d'espaces intérieurs 12 est, dans un mode de réalisation, l'ensemble des espaces intérieurs desservis par une même unité de ventilation 18. Sur la figure 1, il existe par exemple deux groupes 23a, 23b d'espaces intérieurs 12.

Le système de gestion 30 comprend une unité de gestion globale 32 qui contrôle les unités de ventilation 18 en fonction de paramètres extérieurs au bâtiment 10 et/ou de paramètres locaux du bâtiment 10 provenant d'une pluralité d'unités de centralisation des données locales 34. Les pluralités d'unités de centralisation des données locales 34 envoient, entre autres, des paramètres liés à la présence de polluants dans les espaces intérieurs au module de gestion globale 32.

Le système de gestion 30 pourrait de plus avoir une mémoire qui stockerait des paramètres relatifs à l'organe d'extraction d'air 19. Par exemple, un premier paramètre pourrait être relié au fait que l'installation de ventilation 16 est une installation à induction d'air. Cet exemple pourrait être raffiné en précisant d'autres particularités de l'installation de ventilation 16, tel que la version, ou autre.

Le système de gestion 30 peut être relié aux unités de ventilation 18 de façon filaire ou non-filaire, et de façon directe ou indirecte (par exemple à travers un réseau d'objets connectés type SIGFOX, LoRa ou équivalent). Le système de gestion 30 peut avoir l'unité de gestion globale 32 disposée sur le toit 24 comme illustré à la figure 1, ou dans un local technique du bâtiment 10, s'il est relié électriquement aux unités de ventilation 18.

Selon une variante, le système de gestion 30 pourrait contrôler plusieurs installations de ventilation de bâtiments voisins d'un même ensemble de bâtiments. Dans ce cas, le système de gestion 30 pourrait émettre la même consigne en direction des organes d'extraction d'air 19 associés aux différents bâtiments, ou des consignes différentes, car certains paramètres, comme les heures d'assistance renforcées, ou la vitesse du vent, pourraient différer selon les bâtiments (différentes hauteurs, différents emplacements, différents types d'occupation, ...).

### a. Unité de gestion globale

**L'unité de gestion globale 32** comprend un **module de communication** 36 adapté à recevoir une pluralité de données, un **module de calcul** 38 adapté à déterminer au moins un paramètre global à partir de la pluralité de données reçues par le module de communication 36, et un **module de commande** 40 adapté à opérer l'unité de ventilation 18 à partir dudit au moins un paramètre déterminé par le module de calcul 38.

### i. Module de communication - paramètres reçus et paramètres envoyés

La pluralité de données reçues par le **module de communication 36** inclut des données extérieures au bâtiment 10 et des données et/ou paramètres provenant des unités de centralisation des données locales 34.

Les données extérieures au bâtiment 10 incluent par exemple un paramètre climatique d'environnement. La valeur du paramètre climatique d'environnement peut par exemple être fournie par un capteur local (non illustré) raccordé au système de gestion 30. On peut par exemple penser à une température extérieure mesurée par un thermomètre, une vitesse de vent mesurée par un anémomètre, un taux d'humidité ambiante mesuré par un hygromètre.

En variante ou en complément, le paramètre climatique d'environnement pourrait être fourni par les technologies de l'information à partir d'un serveur distant ou via le nuage informatique (i.e. cloud) communiquant avec le système de gestion 30. Ceci pourrait être notamment le cas de la température et/ou du taux d'humidité au niveau du bâtiment 10. Un serveur distant est un serveur qui ne se trouve pas dans le bâtiment 10. Le serveur distant peut communiquer avec le système de gestion 30 par voie filaire ou pas. Un exemple de serveur distant sera donné plus bas (système de surveillance à distance 60).

Le module de communication 36 peut émettre en direction du serveur distant une information relative à l'unité de ventilation 18 contrôlée par le système de gestion 30, notamment une alerte relative à un dysfonctionnement de l'installation de ventilation 16 et/ou une information permettant au serveur distant de vérifier le bon fonctionnement de l'installation de ventilation 16. D'autres paramètres peuvent être envoyés au serveur distant, notamment un ou plusieurs des paramètres reçus par le module de communication 36.

Si ce paramètre n'est déjà pas intégré dans le système, un autre paramètre pouvant être reçu par le **module de communication 36** est l'heure. Pour cela, le système de gestion 30 peut comporter une horloge, et/ou peut recevoir une information relative à l'heure depuis le serveur distant. L'information relative à l'heure peut être prise en compte pour augmenter la ventilation aux heures où une occupation probable du bâtiment 10 peut présager de la nécessité d'une ventilation plus importante. Dans un immeuble d'habitation, il peut par exemple s'agir des heures de repas, et/ou des heures de bain. Le module de calcul 38 pourra alors, par exemple, dans les créneaux horaires pré-programmés, augmenter d'un niveau la consigne de fonctionnement, quand c'est possible.

### ii. Module de calcul

Le **module de calcul 38** est adapté pour déterminer à partir d'un ou plusieurs des paramètres ou données reçus par le module de communication 36 un paramètre global de fonctionnement du système de gestion 30, par exemple la vitesse de fonctionnement des unités de ventilation 18.

Le ou les paramètres globaux de fonctionnement de l'unité de ventilation 18 peuvent être déterminés en comparant les paramètres et/ou données reçus par le module de communication 36 avec des valeurs de consigne de fonctionnement prédéterminées. En ce sens, l'unité de gestion globale 32 pourrait comprendre une mémoire stockant les valeurs de plusieurs paramètres et une ou plusieurs règles prédéterminées de comparaison et de détermination de paramètres de fonctionnement. Les règles prédéterminées pourraient par exemple être applicables à seulement des types d'installation de ventilation prédéterminés.

Le (ou les) paramètre de consigne de fonctionnement peut être un paramètre absolu, comme un paramètre dont la valeur est directement représentative de la puissance ou de la vitesse de ventilation de l'organe d'extraction d'air 19. Il peut être également un paramètre relatif, comme un paramètre dont la valeur indique une augmentation ou une diminution de la puissance ou de la vitesse de ventilation actuelle de l'organe d'extraction d'air 19. Il peut s'agir d'un booléen, d'un réel, d'une fonction, etc.

Le cas échéant, le module de calcul 38 est adapté pour faire un pré-traitement des valeurs relatives au paramètre climatique d'environnement. Ceci pourrait être notamment le cas de la valeur de vitesse de vent, pour prendre en compte les bourrasques ou les turbulences fréquentes dans ce genre d'espace.

Dans un mode de réalisation, l'unité de gestion globale 32 est un automate. Le module de calcul 38 de l'unité de gestion globale 32 inclut un algorithme autorégulant la vitesse de l'organe d'extraction d'air 19 de l'unité de ventilation 18 en continue en fonction de valeurs prédéterminées.

Par exemple, le module de calcul 38 peut déterminer un paramètre de consigne de fonctionnement de l'organe d'extraction d'air 19 (vitesse de rotation d'une turbine du ventilateur, puissance de fonctionnement, débit d'air généré, ...) parmi cinq valeurs à partir de données de température extérieure et de vitesse du vent selon la table suivante (T1 <T2<T3<T4<T5<T6, 0<v1 <v2<v4<v4, 0<K1 <K2<K3<K4) :

| Température : Vent | [T1 ; T2[ | [T2 ; T3[ | [T3 ; T4[ | [T4 ; T5[ | [T5 ; T6[ |
|---|---|---|---|---|---|
| [0 ; v1[ | 0 | K2 | K3 | K4 | 0 |
| [v1 ; v2[ | 0 | K1 | K2 | K3 | 0 |
| [v2 ; v3[ | 0 | 0 | K1 | K2 | 0 |
| [v-3 ; v4[ | 0 | 0 | 0 | 0 | 0 |

Ainsi, plus le vent est faible, plus une assistance importante est nécessaire au niveau de l'organe d'extraction d'air 19. Cette commande serait toutefois modulée pour prendre en compte la température, et d'autres paramètres tels que ceux provenant des unités de centralisation des données locales 34.

Selon un exemple, en cas de température ambiante trop importante ou trop basse (T1 ou T6 sont éventuellement illimités), l'organe d'extraction d'air 19 peut être arrêté pour éviter les dysfonctionnements. Dans la plage de température ambiante de fonctionnement, plus la température ambiante est élevée, plus une assistance importante est nécessaire au niveau de l'organe d'extraction d'air 19. En outre, on peut prendre en compte une possibilité de délestage, à partir d'une température prédéterminée, où l'on peut admettre que l'aération peut se faire par ouverture des fenêtres. La température n'étant pas le seul paramètre déterminant pour le fonctionnement du système, d'autres paramètres peuvent l'influencer : la vitesse, le taux de polluants, l'hygrométrie ...

Si le variateur associé à l'organe d'extraction d'air 19 permet plus de quatre vitesses différentes, la table ci-dessus pourra être adaptée. Cette détermination peut être faite périodiquement, par exemple toutes les minutes.

Le système de gestion 30, dans un mode de réalisation, peut être amené à contrôler plusieurs organes d'extraction d'air 19 en les soumettant à la même consigne. En variante, les organes d'extraction d'air 19 peuvent être soumis à des consignes individualisées, ou groupées. Le système de gestion 30 peut sélectionner une règle prédéterminée à appliquer à un organe d'extraction d'air 19 ou un groupe d'organes d'extraction d'air 19 donnés parmi une pluralité de règles prédéterminées.

### iii.Module de commande

Le module de commande 40 commande les systèmes d'assistance d'extraction d'air 20 (augmente ou diminue la vitesse des moteurs 21 associés aux organes d'extraction d'air 19) en fonction des paramètres de fonctionnement déterminés par le module de calcul 38, tels que discutés plus haut. Le module de commande 40 peut être connecté aux organes d'extraction d'air 19 de façon filaire ou non filaire, et de façon directe ou indirecte (par exemple à travers un réseau d'objets connectés type SIGFOX ou LoRa). La vitesse des organes d'extraction d'air 19 pourrait être contrôlée en continue de façon variable ou bien par paliers.

### b. Unité de centralisation des données locales

L'unité de centralisation des données locales 34 regroupe les données associées à un groupe 23 d'espaces intérieurs 12 qui sont commandés par une même unité de ventilation 18. Ces données peuvent être traitées avant d'être envoyées à l'unité de gestion globale 32 pour adapter la ventilation en conséquence. Dans un mode de réalisation, chaque unité de centralisation des données locales 34 est associée à une unité de ventilation 18. Dans un autre mode de réalisation, chaque unité de centralisation des données locales 34 est associée à plusieurs unités de ventilation 18.

L'unité de centralisation des données locales 34 inclut un **module de communication 50,** un **module de calcul 52,** et optionnellement un **module de commande 54** similaires à ceux de l'unité de gestion globale 32. L'unité de centralisation des données locales 34 pourrait aussi inclure un afficheur constituant une interface homme machine et permettant l'affichage des données recueillies.

### iv.Module de communication - paramètres reçus et paramètres envoyés

L'unité de centralisation des données locales 34, par l'intermédiaire de son module de communication 50, récupère des données relatives aux taux de polluants relevés dans un ou plusieurs espaces intérieurs 12 et optionnellement, un paramètre au niveau d'un groupe 23 d'espaces intérieurs 12 du bâtiment 10. D'autres données ou paramètres peuvent être reçus par L'unité de centralisation des données locales 34.

### a. Polluants intérieurs

Selon un mode de réalisation, un **module de détection** 42 de la qualité de l'air est en communication avec le module de communication 50 de l'unité de centralisation des données locales 34. Le module de détection 42 de la qualité de l'air peut être sous la forme d'un boîtier d'acquisition des polluants intérieurs disposé dans plusieurs des espaces intérieurs 12 pour relever les niveaux de polluants dans les espaces intérieurs 12.

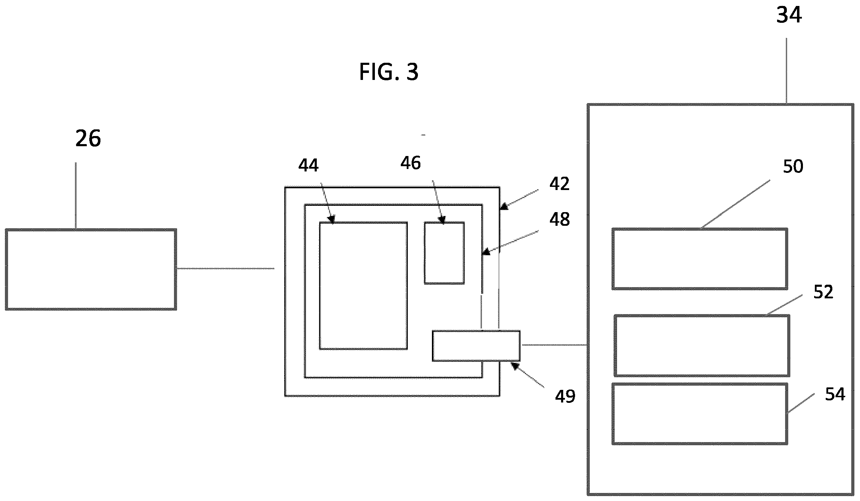

En référence à la **figure 3****,** le module de détection 42 de la qualité de l'air comporte différents **capteurs 44,** par exemple des capteurs de composants atmosphériques gazeux tels que le formaldéhyde (CH₂O), le monoxyde de carbone (CO), le benzène (C₆H₆), ou des capteurs d'hygrométrie intérieure ou encore des détecteurs de présence humaine.

Ce module de détection 42 de la qualité de l'air récupère et traite les informations issues des capteurs 44 grâce à un **microcontrôleur 46** intégré dans le boîtier sur une **carte électronique 48.** Le microcontrôleur 46 traite ces informations en fonction des valeurs seuils des taux de concentration des polluants référencés dans la mémoire interne de celui-ci.

D'une part, le microcontrôleur 46 envoie les données traitées au module de communication 50 de l'unité de centralisation des données locales 34, qui lui-même va les transmettre après traitement (exemple : moyenne) ou pas, à l'unité de gestion globale 32, grâce au transmetteur 49.

D'autre part, en fonction des données recueillies et des taux de concentrations de polluants enregistrés, le microcontrôleur 46 envoie des informations correspondant à des commandes de modulation du ou des accessoires de ventilation 26, par exemple d'ouverture et de fermeture de la (ou les) bouche d'extraction (e.g. variation d'une section d'ouverture de la bouche d'extraction) de l'espace intérieur 12 associée. Cette commande peut être faite directement par le boîtier d'acquisition des polluants intérieurs 42 ou bien par l'unité de centralisation des données locales 34 en faisant remonter l'information du boîtier d'acquisition des polluants intérieurs 42 vers l'unité de centralisation des données locales 34 pour commander la (ou les) bouche d'extraction par le module de commande 54 de l'unité de centralisation des données locales 34.

Les polluants auront, par exemple, chacun des seuils maximums admissibles. En cas de dépassement, une première ouverture des bouches d'extraction permettra une extraction plus importante localement au niveau du logement. Puis, si cette insuffisance est constatée, de manière plus générale, sur la totalité des groupes de logements associés à la même unité de contrôle, alors un ordre direct de modulation des vitesses du système de ventilation pourra être donné.

### b. Dépression d'un empilement de locaux d'une cage d'escalier (cas de conduit vertical commun)

L'unité de communication 50 peut recevoir un paramètre au niveau d'un groupe 23 d'espaces intérieurs 12 du bâtiment 10. Ce paramètre peut être une dépression générée pour l'extraction de l'air vicié dans, par exemple, la cage d'escaliers commune à un groupe 23 d'espaces intérieurs 12 empilés verticalement les uns sur les autres. Ces mesures peuvent permettre de déterminer si ces dépressions générées sont suffisantes ou trop importantes pour assurer une qualité de l'air optimale et éviter au maximum les déperditions énergétiques. Pour cela, on peut utiliser les données recueillies dans une seule cage d'escaliers, et distribuer cette donnée à toutes les unités de ventilation 18. Ceci pourrait être le cas si l'on considère que la cage d'escaliers mesurée est représentative des autres cages d'escaliers du bâtiment 10 (cage témoin).

Afin de mesurer les dépressions, un ou plusieurs capteurs de pression différentielle 55 seraient positionnés à des positions pertinentes à l'intérieur des conduits de ventilation et/ou de fumée, reliés à la cage d'escaliers. Les données des capteurs de pression peuvent être envoyées directement à l'unité de centralisation des données locales 34 pour relayage vers l'unité de gestion globale 32. Dans un autre mode de réalisation, l'unité de gestion globale 32 pourrait directement traiter les données issues des capteurs de pression différentielle.

### v. Module de calcul

Selon l'invention, le module de calcul 52 de l'unité de centralisation des données locales 34, réalise la moyenne des données reçues par type de polluants dont certains recensés prioritaires, sur un groupe 23 de plusieurs d'espaces intérieurs 12 commandé par une même unité de ventilation 18. Ces moyennes permettront de déterminer si l'extraction d'air vicié est suffisante au niveau du groupe 23 d'espaces intérieurs 12 en fonction des seuils limites jugés admissibles qui seront paramétrés dans le module de calcul 52. Le module de calcul 52 est par exemple un microcontrôleur.

Ainsi, en fonction de ces seuils limites et des moyennes calculées de polluants et, optionnellement, de la pression différentielle mesurée dans la cage d'escaliers, l'unité de centralisation des données locales 34 est capable d'émettre des ordres de commande à l'unité de gestion globale 32 qui les répercutera au niveau de toutes les unités de ventilation 18. Cette communication entre les unités de centralisation des données locales 34 et l'unité de gestion globale 32 peut se faire de manière filaire ou sans fil, et de façon directe ou indirecte (par exemple à travers un réseau d'objets connectés type SIGFOX ou LoRa).

Ces ordres de commande auront pour effet une augmentation ou une réduction générale de l'extraction d'air vicié au niveau du système de ventilation 16 en fonction des taux moyennés de polluants des espaces intérieurs 12 desservis.

Ces informations peuvent être consultées par les gestionnaires du patrimoine exploitants du système de ventilation 16 via une interface Homme/Machine portative ou intégrée (par exemple un écran de contrôle) et/ou via le système de supervision à distance des installations de ventilation 16 décrit ci-dessous.

### vi.Module de commande

### a. Accessoires de ventilation (par exemple bouche d'extraction pilotée)

Un ou plusieurs accessoires de ventilation 26 des espaces intérieurs 12 peuvent être modulés en fonction des données reçues par le boîtier d'acquisition des polluants intérieurs 42. Par exemple, les bouches d'extraction des espaces intérieurs 12 peuvent être pourvues d'un système de commande d'ouverture et de fermeture automatisé en fonction des données reçues par le boîtier d'acquisition des polluants intérieurs 42. Cette bouche d'extraction pilotée est alors pourvue d'une carte électronique de réception des données soit par voie filaire, soit par voie sans fil. Ces données peuvent être acquises de façon directe ou indirecte (par exemple à travers un réseau d'objets connectés type SIGFOX ou LoRa). A réception de ces données, la carte électronique est capable de commander un actionneur permettant l'ouverture et la fermeture de la bouche d'extraction pilotée. Les accessoires de ventilation 26, tels que la bouche d'extraction pilotée constitue ainsi un acteur de la modulation de débit au niveau de l'espace intérieur 12 en fonction des taux de polluants relevés par le boîtier d'acquisition des polluants intérieur. Un éventuel couplage avec des entrées d'air pilotées dans les pièces sèches (séjours, chambres, bureaux ...) peut également être envisagé.

Selon un autre mode de réalisation, le module de commande 54 de l'unité de centralisation des données locales 34 commande directement la taille de la section d'ouverture des bouches d'extraction 26 en fonction des paramètres déterminés par le module de calcul 52.

Selon un autre mode de réalisation, en fonction du local où la bouche sera positionnée (e.g. salle de bain ou toilettes), un capteur supplémentaire pourra être intégré directement dans la bouche pour prendre en compte un paramètre dominant du local (e.g. hygrométrie pour la salle de bain, capteur de présence pour les toilettes). Ce paramètre supplémentaire pourra être prédominant par rapport à ceux envoyés par le boîtier d'acquisition des polluants.

### 3. Système de gestion à distance

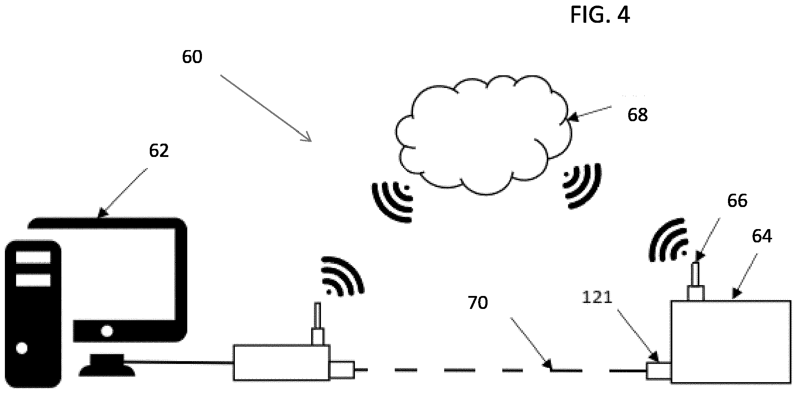

En référence à la figure 4, le système de gestion 30 peut comprendre, de plus, un **système de supervision à distance 60.** Grâce à ce système de contrôle à distance 60, une partie au moins des informations sur le fonctionnement des installations de ventilation 16, jugées utiles à l'appréciation du renouvellement d'air dans les logements, peuvent être visionnées sur une interface informatique type **plateforme web 62** en temps quasi-réel.

Selon le mode de réalisation de la figure 4, une **balise émettrice 64** se raccordant sur l'unité de gestion globale 32 relève les informations, soit préalablement paramétrées via une liaison Modbus ou tout autre technologie filaire équivalente ou sans fil pour des informations détaillées, soit uniquement via contacts secs pour un simple aperçu sur l'état de fonctionnement.

Cette balise émettrice 64 permet de renvoyer sur des serveurs distants (par exemple via un nuage informatique, communément appelé « cloud » 68) via **émetteur 66** ces informations, soit via un réseau câblé Ethernet 70 (en pointillés), soit via le réseau sans fil par exemple. Selon une réalisation, le moyen de communication à distance de données, proximal, est un réseau WI-FI ou GSM ou GPRS ou SIGFOX ou LoRaWAN. Ainsi, le moyen de communication à distance assure un accès aux données du dispositif simple à mettre en oeuvre et sans limitation géographique.

La plateforme web 62 pourrait récupérer ces informations sur les serveurs distants et les traduit de sorte qu'elles soient interprétables par les opérateurs venant consulter la plateforme.

Les informations de cette plateforme pourront être consultées de manière répartie entre le maitre d'ouvrage ou le gestionnaire et également l'exploitant. L'occupant pourrait également avoir accès aux informations associées à son logement, soit via une plateforme web, soit au travers de son smartphone ou tout autre moyen équivalent, pour, par exemple, moduler lui-même le ou les accessoires de ventilations, par exemple changer les sections d'ouverture des bouches d'extraction 26 de son logement en agissant entre un minimum et un maximum des taux de polluants analysés.

La présente invention peut présenter un intérêt particulier dans le domaine de la ventilation d'habitat collectif (ou du tertiaire). En effet, elle permet de moduler la ventilation de différents locaux associés à un ventilateur commun. Ainsi, le ventilateur commun peut être, le cas échéant, réglé ou réglable pour définir une stratégie générale de ventilation des logements qui lui sont associés, sur des critères, par exemple climatiques, et destinés par exemple à optimiser la consommation énergétique du ventilateur commun. Les accessoires de ventilation réglables permettent de moduler au niveau de chaque logement cette stratégie générale pour prendre en compte les spécificités de chaque logement, permettant ainsi d'optimiser les économies d'énergies réalisées sur les débits d'air extraits par rapport aux besoins des taux de concentration des polluants du moment pour assurer une bonne qualité d'air intérieur. En effet, différents logements associés à un même ventilateur peuvent répondre à des besoins en ventilation différents à chaque moment donné. Par exemple, certains peuvent être des commerces ou espaces d'activités tertiaires (écoles, bureaux, ...) et d'autres des habitations, avec par conséquent des teneurs en polluants différentes à un moment de la journée, des températures différentes, etc. L'information locale est de plus relayée au niveau du bâtiment pour être appliquée à l'ensemble des unités de ventilations, selon le besoin, en ayant effectué au préalable une moyenne des paramètres relevés. Un éventuel couplage avec un module logiciel d'analyse des polluants par simulation peut également être envisagé afin d'estimer l'état du bâtiment en matière de pollution.

### NOMENCLATURE

bâtiment 10
espaces intérieurs 12
extérieur 13
sous-espaces intérieurs 14
installation de ventilation 16
unités de ventilation 18
organe d'extraction d'air 19
système d'assistance d'extraction d'air 20
moteur 21
conduits 22
groupe d'espaces intérieurs 23, 23a, 23b
toit 24
accessoire de ventilation 26
système de gestion 30
unité de gestion globale 32
unité de centralisation des données locales 34
cage d'escaliers 35
module de communication 36
module de calcul 38
module de commande 40
boîtier d'acquisition des polluants intérieurs 42
capteurs 44
microcontrôleur 46
carte électronique 48
transmetteur 49
module de communication 50
module de calcul 52
module de commande 54
capteur de pression différentielle 55
système de supervision à distance 60
plateforme web 62
balise émettrice 64
émetteur 66
nuage informatique 68
réseau câblé Ethernet 70

## Revendications

1. **Système de gestion (30) d'unités de ventilation (18)** dans un bâtiment (10) comportant plusieurs groupes (23) d'espaces intérieurs (12) et lesdites unités de ventilation, chaque groupe d'espaces intérieurs ayant une unité de ventilation associée extrayant de l'air vicié des espaces intérieurs (12), l'unité de ventilation incluant un système d'assistance d'extraction d'air (20), le système de gestion comprenant une unité de gestion globale (32) et une pluralité d'unités de centralisation des données locales (34), l'unité de gestion globale (32) étant adaptée pour communiquer avec la pluralité d'unités de centralisation des données locales (34) pour commander les unités de ventilation, chaque unité de centralisation des données locales étant associée à au moins une unité de ventilation,
- **L'unité de gestion globale** (32) du bâtiment incluant :
∘ Un **module de communication** (36) adapté à recevoir une pluralité de données, la pluralité de données incluant des données extérieures au bâtiment et au moins un paramètre local de fonctionnement d'une unité de ventilation ;
∘ Un **module de calcul** (38) adapté à déterminer au moins un paramètre global de fonctionnement des unités de ventilation à partir de la pluralité de données reçues par le module de communication (36) de l'unité de gestion globale (32) ; et
∘ Un **module de commande** (40) adapté à opérer les unités de ventilation à partir dudit au moins un paramètre global de fonctionnement déterminé par le module de calcul ; et
- Chacune des unités **de centralisation des données locales** (34) incluant :
∘ Un **module de communication** (50) adapté à recevoir des données associées à la concentration d'au moins un polluant dans au moins un des espaces intérieurs ; et
∘ Un **module de calcul (52)** adapté à déterminer le paramètre local de fonctionnement à partir des données associées au groupe d'espaces intérieurs reçues par le module de communication (50),
**caractérisé en ce que**
ledit module de calcul (52) de chaque unité de centralisation des données locales (34) est à apte à réaliser la moyenne des données reçues par type de polluants sur au moins un desdits groupe (23) commandé par une même unité de ventilation (18), une desdites unités de centralisation des données locales (34) étant apte à émettre des ordres de commande à ladite unité de gestion globale (32) en fonction desdites moyennes calculées de polluants et de seuils limites jugés admissibles qui sont aptes à être paramétrés dans ledit module de calcul (52).

2. Le système de gestion de la revendication 1, dans lequel le module de communication (50) inclus dans chacune des unités de centralisation des données locales (34) est adapté à recevoir des données associées à la concentration d'au moins un polluant d'au moins un module de détection (42) de qualité d'air, ledit au moins un module de détection étant associé à au moins un des espaces intérieurs pour analyser la concentration d'au moins un polluant dans ledit au moins un des espaces intérieurs.

3. Le système de gestion de la revendication 2, dans lequel
∘ chaque espace intérieur a au moins un accessoire de ventilation (26) connectée de manière fluide à l'unité de ventilation de son groupe d'espace intérieurs, ledit au moins un accessoire de ventilation étant connectés auxdits au moins un module de détection de qualité d'air,
∘ chacun des modules de détection de qualité d'air comprenant : un microcontrôleur (46) adapté à déterminer un paramètre de fonctionnement dudit au moins un accessoire de ventilation en fonction des concentrations d'au moins un polluant détectées, le microcontrôleur étant adapté à opérer ledit au moins un accessoire de ventilation en fonction du paramètre de fonctionnement dudit au moins un accessoire de ventilation.

4. Le système de gestion selon l'une des revendications 1 à 3, dans lequel chaque unité de centralisation des données locales est associée à une unité de ventilation qui lui est propre.

5. Le système de gestion selon l'une des revendications 1 à 4, dans lequel les données extérieures au bâtiment incluent au moins un de : une température de l'air ambiant extérieur, une vitesse de l'air extérieur, une donnée horaire.

6. Le système de gestion selon l'une des revendications 1 à 5, dans lequel le système d'assistance d'extraction d'air (20) inclut un organe d'extraction d'air (19) et un moteur (21) associé, et le paramètre global de fonctionnement est une vitesse du moteur.

7. Le système de gestion de la revendication 6, dans lequel le module de calcul de l'unité de gestion globale inclut un algorithme autorégulant la vitesse du moteur associé à l'organe d'extraction d'air en continue en fonction de valeurs prédéterminées.

8. Le système de gestion selon l'une des revendications 1 à 7, dans lequel au moins une des unités de ventilation inclue au moins un capteur de pression différentielle dans un conduit relié à ladite au moins une unité de ventilation, et
le module de communication de l'unité de centralisation des données locales est adapté à recevoir une information de pression aux espaces intérieurs associés au dit conduits, l'information de pression provenant de capteurs de pression différentielle.

9. Le système de gestion selon l'une des revendications 1 à 8, dans lequel le module de communication de l'unité de gestion globale est adapté à communiquer avec un serveur distant du bâtiment.

10. Le système de gestion selon l'une des revendications 1 à 9, dans lequel l'unité de gestion globale est adaptée pour être disposée sur un toit du bâtiment, et/ou l'unité de centralisation des données locales est adaptée pour être disposée dans une partie commune reliant les espaces intérieurs d'un même groupe.

11. Un **procédé de gestion d'unités de ventilation (18)** dans un bâtiment (10) comportant plusieurs groupes (23) d'espaces intérieurs (12), chaque groupe d'espaces intérieurs ayant une unité de ventilation (18) associée extrayant de l'air vicié des espaces intérieurs (12), chaque unité de ventilation incluant un système d'assistance d'extraction d'air (20), le système de gestion comprenant une unité de gestion globale (32) adaptée pour communiquer avec une pluralité d'unités de centralisation des données locales (34) pour commander les unités de ventilation, le procédé comprenant :
∘ Recevoir par un **module de communication** (50) de chaque unité **de centralisation des données locales** des données associées à une information de qualité de l'air d'au moins un module de détection de qualité d'air associé à au moins un des espaces intérieurs, ledit au moins un module de détection étant adapté à analyser la concentration d'au moins un polluant dans ledit au moins un des espaces intérieurs ;
∘ Déterminer par un **module de calcul (52)** de chaque unité **de centralisation des données locales** au moins un paramètre local de fonctionnement d'une unité de ventilation à partir des données associées au groupe d'espaces intérieurs reçues par le module de communication (50) ;
∘ Réaliser par ledit module de calcul (52) la moyenne des données reçues par type de polluants sur au moins un desdits groupe (23) commandé par une même unité de ventilation (18), une desdites unités de centralisation des données locales (34) étant apte à émettre des ordres de commande à ladite unité de gestion globale (32) en fonction desdites moyennes calculées de polluants et de seuils limites jugés admissibles qui sont aptes à être paramétrés dans ledit module de calcul (52) ;
∘ Envoyer par le **module de communication** (50) de chaque unité **de centralisation des données locales** à l'unité de gestion globale ledit au moins un paramètre local de fonctionnement d'une unité de ventilation ;
∘ Recevoir par un **module de communication** (36) de **l'unité de gestion globale** (32) une pluralité de données pour les communiquer à un module de calcul de l'unité de gestion globale (32), la pluralité de données incluant des données extérieures au bâtiment et ledit au moins un paramètre local de fonctionnement d'une unité de ventilation provenant de l'unité de centralisation des données locales ;
∘ Déterminer par un **module de calcul** (38) de **l'unité de gestion globale** (32) au moins un paramètre global de fonctionnement des unités de ventilation à partir de la pluralité de données reçues par le module de communication ; et
∘ Opérer par un **module de commande (40)** de l'unité de gestion globale (32) les unités de ventilation à partir dudit au moins un paramètre global déterminé par le module de calcul de **l'unité de gestion globale** (32).

12. Le procédé de gestion d'air ventilé de la revendication 11, comprenant de plus :
∘ Déterminer par le module de calcul (52) de chaque unité de centralisation des données locales un paramètre de fonctionnement d'au moins un accessoire de ventilation en fonction des données associées au groupe d'espaces intérieurs reçues par le module de communication de chaque unité de centralisation des données locales, chaque espace intérieur ayant au moins un accessoire de ventilation (26) connecté de manière fluide à l'unité de ventilation de son groupe, ledit au moins un accessoire de ventilation étant connecté auxdits au moins un module de détection de qualité d'air; et
∘ Opérer ledit au moins un accessoire de ventilation par le module de détection de qualité d'air en fonction du paramètre de fonctionnement dudit au moins un accessoire de ventilation déterminé par le module de détection de qualité d'air.

## Patentansprüche

1. System (30) zum Management von Lüftungseinheiten (18) in einem Gebäude (10), umfassend mehrere Gruppen (23) von Innenräumen (12) und Lüftungseinheiten, wobei jede Gruppe von Innenräumen eine zugeordnete Lüftungseinheit aufweist, die verbrauchte Luft aus den Innenräumen (12) abzieht, wobei die Lüftungseinheit ein Luftabzugsunterstützungssystem (20) umfasst, wobei das Managementsystem eine globale Managementeinheit (32) und eine Mehrzahl von Einheiten zur Zentralisierung der lokalen Daten (34) umfasst, wobei die globale Managementeinheit (32) dazu ausgebildet ist, mit der Mehrzahl von Einheiten zur Zentralisierung der lokalen Daten (34) zu kommunizieren, um die Lüftungseinheiten zu steuern, wobei jede Einheit zur Zentralisierung der lokalen Daten wenigstens einer Lüftungseinheit zugeordnet ist,
- wobei die globale Managementeinheit (32) des Gebäudes umfasst:
∘ ein Kommunikationsmodul (36), das dazu ausgebildet ist, eine Mehrzahl von Daten zu empfangen, wobei die Mehrzahl von Daten Daten außerhalb des Gebäudes und wenigstens einen lokalen Parameter für den Betrieb einer jeden Lüftungseinheit umfasst,
∘ ein Rechenmodul (38), das dazu ausgebildet ist, wenigstens einen globalen Betriebsparameter der Lüftungseinheiten aus der Mehrzahl von Daten zu bestimmen, die von dem Kommunikationsmodul (36) der globalen Managementeinheit (32) empfangen werden; und
∘ ein Steuerungsmodul (40), das dazu ausgebildet ist, die Lüftungseinheiten auf der Grundlage des wenigstens einen globalen Betriebsparameters zu betreiben, der von dem Rechenmodul bestimmt wurde; und
- wobei jede der Einheiten zur Zentralisierung der lokalen Daten (34) umfasst:
o ein Kommunikationsmodul (50), das dazu ausgebildet ist, Daten zu empfangen, die der Konzentration wenigstens eines Schadstoffs in wenigstens einem der Innenräume zugeordnet ist; und
o ein Rechenmodul (52), das dazu ausgebildet ist, den lokalen Betriebsparameter aus den Daten zu bestimmen, die der Gruppe von Innenräumen zugeordnet sind und vom Kommunikationsmodul (50) empfangen werden,
**dadurch gekennzeichnet,**
**dass** das Rechenmodul (52) jeder Einheit zur Zentralisierung der lokalen Daten (34) dazu geeignet ist, den Mittelwert der Daten zu bilden, die pro Schadstofftyp über wenigstens eine der Gruppen (23) empfangen werden, die von derselben Lüftungseinheit (18) gesteuert werden, wobei eine der Einheiten zur Zentralisierung der lokalen Daten (34) dazu geeignet ist, Steuerbefehle an die globale Managementeinheit (32) auszugeben, auf der Basis der berechneten Schadstoffmittelwerte und von als zulässig erachteten Grenzwerten, die dazu geeignet sind, in dem Rechenmodul (52) parametrisiert zu werden.

2. Managementsystem nach Anspruch 1, wobei das Kommunikationsmodul (50), das in jeder der Einheiten zur Zentralisierung der lokalen Daten (34) enthalten ist, dazu ausgebildet ist, Daten zu empfangen, die der Konzentration wenigstens eines Schadstoffs wenigstens eines Luftqualitäts-Erfassungsmoduls (42) verbunden sind, wobei das wenigstens eine Erfassungsmodul wenigstens einem der Innenräume zugeordnet ist, um die Konzentration wenigstens eines Schadstoffs in dem wenigstens einen der Innenräume zu analysieren.

3. Managementsystem nach Anspruch 2, wobei
o jeder Innenraum wenigstens ein Lüftungszubehör (26) umfasst, das in Fluidverbindung mit der Lüftungseinheit seiner Gruppe von Innenräumen steht, wobei das wenigstens eine Lüftungszubehör mit dem wenigstens einen Luftqualitäts-Erfassungsmodul verbunden ist,
o jedes der Luftqualitäts-Erfassungsmodule umfasst: einen Mikrocontroller (46), der dazu ausgebildet ist, einen Betriebsparameter des wenigstens einen Lüftungszubehörs auf der Basis der erfassten Konzentrationen wenigstens eines Schadstoffs zu bestimmen, wobei der Mikrocontroller dazu ausgebildet ist, das wenigstens eine Lüftungszubehör auf der Basis des Betriebsparameters des wenigstens einen Lüftungszubehörs zu betreiben.

4. Managementsystem nach einem der Ansprüche 1 bis 3, wobei jede Einheit zur Zentralisierung der lokalen Daten einer eigenen Lüftungseinheit zugeordnet ist.

5. Managementsystem nach einem der Ansprüche 1 bis 4, wobei die Daten außerhalb des Gebäudes wenigstens eines der folgenden Elemente umfassen: eine Temperatur der Außenluft, eine Geschwindigkeit der Außenluft, eine Zeitangabe.

6. Managementsystem nach einem der Ansprüche 1 bis 5, wobei das Luftabzugsunterstützungssystem (20) ein Luftabzugselement (19) und einen zugeordneten Motor (21) umfasst und der globale Betriebsparameter eine Motorgeschwindigkeit ist.

7. Managementsystem nach Anspruch 6, wobei das Rechenmodul der globalen Managementeinheit einen Algorithmus aufweist, der die Drehzahl des dem Luftabzugselement zugeordneten Motors kontinuierlich auf der Basis von vorbestimmten Werten selbst reguliert.

8. Managementsystem nach einem der Ansprüche 1 bis 7, wobei wenigstens eine der Lüftungseinheiten wenigstens einen Differenzdrucksensor in einem Kanal aufweist, der mit der wenigstens einen Lüftungseinheit verbunden ist, und
das Kommunikationsmodul der Einheit zur Zentralisierung der lokalen Daten dazu ausgebildet ist, Druckinformationen über die mit den Kanälen verbundenen Innenräume zu empfangen, wobei die Druckinformationen von den Differenzdrucksensoren stammen.

9. Managementsystem nach einem der Ansprüche 1 bis 8, wobei das Kommunikationsmodul der globalen Managementeinheit dazu ausgebildet ist, mit einem entfernten Server des Gebäudes zu kommunizieren.

10. Managementsystem nach einem der Ansprüche 1 bis 9, wobei die globale Managementeinheit dazu ausgebildet ist, auf einem Dach des Gebäudes angeordnet zu werden, und/oder die Einheit zur Zentralisierung der lokalen Daten dazu ausgebildet ist, in einem gemeinsamen Teil angeordnet zu werden, der die Innenräume einer gleichen Gruppe verbindet.

11. Verfahren zum Management von Lüftungseinheiten (18) in einem Gebäude (10), umfassend mehrere Gruppen (23) von Innenräumen (12), wobei jede Gruppe von Innenräumen eine zugeordnete Lüftungseinheit (18) aufweist, die verbrauchte Luft aus den Innenräumen (12) abzieht, wobei jede Lüftungseinheit ein Luftabzugunterstützungssystem (20) aufweist, wobei das Managementsystem eine globale Managementeinheit (32) umfasst, die dazu ausgebildet ist, mit einer Mehrzahl von Einheiten zur Zentralisierung der lokalen Daten (34) zur Steuerung der Lüftungseinheiten zu kommunizieren, wobei das Verfahren Folgendes umfasst:
o Empfangen von Daten, die mit Luftqualitätsinformationen von wenigstens einem Luftqualitäts-Erfassungsmodul verbunden sind, das wenigstens einem der Innenräume zugeordnet ist, durch ein Kommunikationsmodul (50) jeder Einheit zur Zentralisierung der lokalen Daten, wobei das wenigstens eine Erfassungsmodul dazu geeignet ist, die Konzentration wenigstens eines Schadstoffs in dem wenigstens einen der Innenräume zu analysieren;
o Bestimmen von wenigstens einem lokalen Betriebsparameter einer Lüftungseinheit durch ein Rechenmodul (52) jeder Einheit zur Zentralisierung der lokalen Daten anhand der mit der Gruppe von Innenräumen verbundenen Daten, die von dem Kommunikationsmodul (50) empfangen werden;
o Bilden des Durchschnitts der empfangenen Daten durch das Rechenmodul (52) nach Art der Schadstoffe in wenigstens einer der Gruppen (23), die von derselben Lüftungseinheit (18) gesteuert werden, wobei eine der Einheiten zur Zentralisierung der lokalen Daten (34) in der Lage ist, Steuerbefehle an die globale Managementeinheit (32) zu senden, auf der Basis der berechneten Durchschnittswerte der Schadstoffe und von als zulässig erachteten Grenzwerten, die in dem Rechenmodul (52) parametriert werden können;
o Senden des wenigstens einen, lokalen Parameters für den Betrieb einer Lüftungseinheit durch das Kommunikationsmodul (50) jeder Einheit zur Zentralisierung der lokalen Daten an die globale Managementeinheit;
o Empfangen einer Mehrzahl von Daten durch ein Kommunikationsmodul (36) der globalen Managementeinheit (32), um sie an ein Rechenmodul der globalen Managementeinheit (32) zu übermitteln, wobei die Mehrzahl von Daten Daten außerhalb des Gebäudes und den wenigstens einen lokalen Betriebsparameter einer Lüftungseinheit der Einheit zur Zentralisierung der lokalen Daten aufweist;
o Bestimmen durch ein Rechenmodul (38) der globalen Managementeinheit (32) wenigstens eines globalen Betriebsparameters der Lüftungseinheiten aus der Mehrzahl von Daten, die von dem Kommunikationsmodul empfangen werden; und
o Betreiben der Lüftungseinheiten durch ein Steuerungsmodul (40) der globalen Managementeinheit (32) anhand des wenigstens einen, globalen Parameters, der durch das Rechenmodul der globalen Managementeinheit (32) bestimmt wurde.

12. Verfahren zur Steuerung der Lüftungsluft nach Anspruch 11, ferner umfassend:
∘ Bestimmen eines Betriebsparameters für wenigstens ein Lüftungszubehör durch das Rechenmodul (52) jeder Einheit zur Zentralisierung der lokalen Daten auf der Grundlage von Daten, die der Gruppe von Innenräumen zugeordnet sind und vom Kommunikationsmodul jeder Einheit zur Zentralisierung der lokalen Daten empfangen werden, wobei jeder Innenraum wenigstens ein Lüftungszubehör (26) aufweist, das in Fluidverbindung mit der Lüftungseinheit seiner Gruppe steht, wobei das wenigstens eine Lüftungszubehör mit dem wenigstens einen Luftqualitäts-Erfassungsmodul verbunden ist; und
o Betreiben des wenigstens einen Lüftungszubehörs durch das Luftqualitäts-Erfassungsmodul auf der Basis des Betriebsparameters des wenigstens einen Lüftungsgeräts, der durch das Luftqualitäts-Erfassungsmodul bestimmt wird.

## Claims

1. System (30) for managing fan units (18) in a building (10) comprising several groups (23) of indoor spaces (12) and said fan units, each group of indoor spaces having an associated fan unit extracting stale air from the indoor spaces (12), the fan unit including an air extraction support system (20), the management system comprising a global management unit (32) and a plurality of local data centralisation units (34), the global management unit (32) being adapted to communicate with the plurality of local data centralisation units (34) to control the fan units, each local data centralisation unit being associated with at least one fan unit,
- the global management unit (32) of the building including:
∘ a communication module (36) adapted to receive a plurality of data, the plurality of data including data exterior to the building and at least one local operating parameter of a fan unit;
∘ a calculation module (38) adapted to determine at least one global operating parameter of the fan units from the plurality of data received by the communication module (36) of the global management unit (32); and
∘ a control module (40) adapted to operate the fan units based on said at least one global operating parameter determined by the calculation module; and
- each of the local data centralisation units (34) including:
∘ a communication module (50) adapted to receive data associated with the concentration of the at least one pollutant in at least one of the indoor spaces; and
∘ a calculation module (52) adapted to determine the local operating parameter from data associated with the group of indoor spaces received by the communication module (50),
**characterised in that** said calculation module (52) of each local data centralisation unit (34) is able to average the data received by type of pollutant on at least one of said groups (23) controlled by a single fan unit (18), one of said local data centralisation units (34) being able to issue control commands to said global management unit (32) as a function of said calculated averages of pollutants and of limit thresholds deemed admissible which are capable of being set in said calculation module (52).

2. Management system according to Claim 1, wherein the communication module (50) included in each of the local data centralisation units (34) is adapted to receive data associated with the concentration of the at least one pollutant from at least one air quality detection module (42), said at least one detection module being associated with at least one of the indoor spaces in order to analyse the concentration of at least one pollutant in said at least one of the indoor spaces.

3. Management system according to Claim 2, wherein
∘ each indoor space has at least one fan accessory (26) connected in a fluid manner to the fan unit of its group of indoor spaces, said at least one fan accessory being connected to said at least one air quality detection module,
∘ each of the air quality detection modules comprising: a microcontroller (46) adapted to determine an operating parameter of said at least one fan accessory as a function of the concentrations of at least one pollutant detected, the microcontroller being adapted to operate said at least one fan accessory as a function of the operation parameter of said at least one fan accessory.

4. Management system according to one of Clams 1 to 3, wherein each local data centralisation unit is associated with its own fan unit.

5. Management system according to one of Claims 1 to 4, wherein the data exterior to the building includes at least one of: outdoor ambient air temperature, outdoor air speed, time data.

6. Management system according to one of Claims 1 to 5, wherein the air extraction support system (20) includes an air extractor (19) and an associated motor (21), and the global operating parameter is a speed of the motor.

7. Management system according to Claim 6, wherein the calculation module of the global management unit includes an algorithm that continuously self-regulates the speed of the motor associated with the air extractor as a function of predetermined values.

8. Management system according to one of Claims 1 to 7, wherein at least one of the fan units includes at least one differential pressure sensor in a duct connected to said at least one fan unit, and
the communication module of the local data centralisation unit is adapted to receive pressure information at the indoor spaces associated with said duct, the pressure information coming from differential pressure sensors.

9. Management system according to one of Claims 1 to 8, wherein the communication module of the global management unit is adapted to communicate with a server remote from the building.

10. Management system according to one of Claims 1 to 9, wherein the global management unit is adapted to be arranged on the roof of the building, and/or the local data centralisation unit is adapted to be arranged in a common part connecting the indoor spaces of a single group.

11. Method for managing fan units (18) in a building (10) comprising several groups (23) of indoor spaces (12), each group of indoor spaces having an associated fan unit (18) extracting stale air from the indoor spaces (12), each fan unit including an air extraction support system (20), the management system comprising a global management unit (32) adapted to communicate with a plurality of local data centralisation units (34) to control the fan units, the method comprising:
∘ a communication module (50) of each local data centralisation unit receiving data associated with information on air quality from at least one air quality detection module associated with at least one of the indoor spaces, said at least one detection module being adapted to analyse the concentration of at least one pollutant in said at least one of the indoor spaces;
∘ a calculation module (52) of each local data centralisation unit determining at least one local operating parameter of a fan unit from data associated with the group of indoor spaces received by the communication module (50);
∘ said calculation module (52) averaging the data received by type of pollutant on at least one of said groups (23) controlled by a single fan unit (18), one of said local data centralisation units (34) being able to issue control commands to said global management unit (32) as a function of said calculated averages of pollutants and of limit thresholds deemed admissible which are capable of being set in said calculation module (52);
∘ the communication module (50) of each local data centralisation unit sending said at least one local operating parameter of a fan unit to the global management unit;
∘ a communication module (36) of the global management unit (32) receiving a plurality of data in order to communicate it to a calculation module of the global management unit (32), the plurality of data including data exterior to the building and said at least one local operating parameter of a fan unit coming from the local data centralisation unit;
∘ a calculation module (38) of the global management unit (32) determining at least one global operating parameter of the fan units based on the plurality of data received by the communication module; and
∘ a control module (40) of the global management unit (32) operating the fan units based on said at least one global parameter determined by the calculation module of the global management unit (32).

12. Method for managing the ventilated air according to Claim 11, also comprising:
∘ the calculation module (52) of each local data centralisation unit determining an operating parameter of the at least one fan accessory as a function of the data associated with the group of indoor spaces received by the communication module of each local data centralisation unit, each indoor space having at least one fan accessory (26) connected in a fluid manner to the fan unit of its group, said at least one fan accessory being connected to said at least one air quality detection module; and
∘ the air quality detection module operating said at least one fan accessory as a function of the operating parameter of said at least one fan accessory determined by the air quality detection module.
